# EUROPÄISCHE PATENTSCHRIFT

(11) **EP 1 928 686 B1**
(45) Veröffentlichungstag und Bekanntmachung des Hinweises auf die Patenterteilung: **18.02.2009**
(21) Anmeldenummer: 06792774.9
(22) Anmeldetag: 10.08.2006
(51) Int. Cl.: B60K 31/00

(54) **VORRICHTUNG ZUR LÄNGSFÜHRUNG EINES KRAFTFAHRZEUGS**
DEVICE FOR LONGITUDINALLY GUIDING A MOTOR VEHICLE
DISPOSITIF DE GUIDAGE LONGITUDINAL POUR VEHICULE A MOTEUR

(30) Priorität: 21.09.2005 DE 102005045018
(43) Veröffentlichungstag der Anmeldung: 11.06.2008
(73) Patentinhaber: ROBERT BOSCH GMBH, 70442 Stuttgart (DE)
(72) Erfinder: HELLMANN, Manfred, 71706 Hardthof (DE); HAGEMANN, Markus, 70191 Stuttgart (DE)
(86) Internationale Anmeldenummer: PCT/EP2006/065234
(87) Internationale Veröffentlichungsnummer: WO 2007/033867

(56) Entgegenhaltungen:
- EP-A1- 0 956 993
- DE-A1- 19 931 161

## Beschreibung

### Stand der Technik

Die Erfindung betrifft eine Vorrichtung zur Längsführung eines Kraftfahrzeugs, mit einem Sensorsystem zur Ortung vorausfahrender Fahrzeuge, einem Regler, der die Geschwindigkeit des Fahrzeugs entweder, in einem Folgefahrtmodus, in Abhängigkeit vom Abstand zu einem vorausfahrenden Fahrzeug oder, in einem Freifahrtmodus, auf einen Sollwert regelt, einer Schnittstelle zu einem Navigationssystem, das Informationen über die befahrene Route bereitstellt, und einer Begrenzungseinrichtung zur Begrenzung der Sollgeschwindigkeit anhand der bereitgestellten Informationen.

Solche Vorrichtungen zur Längsführung eines Kraftfahrzeugs werden auch als ACC-Systeme (Adaptive Cruise Control) bezeichnet und weisen als Sensorsystem typischerweise einen Radarsensor auf, mit dem die Abstände und Relativgeschwindigkeiten vorausfahrender Fahrzeuge gemessen werden können. Auf diese Weise ist es möglich, ein unmittelbar vorausfahrendes Fahrzeug, das sogenannte Zielobjekt, in einem geeigneten Abstand oder, genauer, mit einer geeignet gewählten Zeitlücke zu verfolgen. Im Freifahrtmodus, wenn kein Zielobjekt vorhanden ist, erfolgt eine Regelung auf eine Sollgeschwindigkeit, die bei den heute im Einsatz befmdlichen Systemen durch eine vom Fahrer gewählte Wunschgeschwindigkeit gegeben ist.

Unter bestimmten Bedingungen, beispielsweise beim Durchfahren enger Kurven, kann es jedoch vorkommen, daß die Wunschgeschwindigkeit nicht an die aktuelle Situation angepaßt ist, so daß die Kurve mit zu hoher Geschwindigkeit durchfahren würde. Der Fahrer ist dann gezwungen, selbst in die Längsführung einzugreifen und das ACC-System vorübergehend zu deaktivieren.

In DE 198 21 803 A1 und DE 199 31 161 A1 sowie EP 0956993 (enthält die Merkmale des Oberbegriffs des Anspruchs 1) werden Längsführungssysteme beschrieben, die eine Anbindung an ein ebenfalls im Fahrzeug vorhandenes Navigationssystems aufweisen, so daß die vom Navigationssystem bereitgestellten Routeninfonnationen, insbesondere die aus einer digitalen Karte ablesbare Information über die Krümmung des unmittelbar vorausliegenden Fahrbahnabschnitts, in die Geschwindigkeitsregelung einfließen können. Hier besteht jedoch das Problem, daß an Kreuzungen oder Weggabelungen im verzweigten Straßennetz nicht immer von vornherein klar ist, welche Route das eigene Fahrzeug nehmen wird. Die vom Navigationssystem bereitgestellte Routeninformation läßt sich deshalb bei der Längsführung nur dann verwerten, wenn auch die Zielführungsfunktion des Navigationssystems aktiv ist, so daß man davon ausgehen kann, daß das eigene Fahrzeug der von der Zielführungsfunktion berechneten Route folgen wird. Die meisten Fahrten mit einem Kraftfahrzeug erfolgen jedoch auf bekanntem Terrain, so daß die Zielführung an sich nicht benötigt wird und eigens für die Zwecke der Längsführung aktiviert werden müßte, was jedoch mit einer relativ umständlichen Zieleingabe verbunden ist. Außerdem kommt es selbst dann, wenn die Zielführung aktiviert ist, relativ häufig vor, daß der Fahrer von der berechneten Route abweicht, weil die vom Navigationssystem ausgeführten Berechnungen zum Auffinden der schnellsten Route zum Ziel auf bestimmten Annahmen über die auf Autobahnen, Landstraße oder innerörtlichen Straßen möglichen Geschwindigkeiten beruhen und diese Annahmen häufig den Erfahrungen des Fahrers widersprechen.

### Vorteile der Erfindung

Die Erfindung mit den in Anspruch 1 angegebenen Merkmalen ermöglicht es, die Funktionen des Längsführungssystems, mit denen eine angepaßte Geschwindigkeit erreicht wird, auch dann zu nutzen, wenn die Zielführung des Navigationssystems nicht aktiviert ist.

Dies wird erfindungsgemäß dadurch erreicht, daß die Begrenzungseinrichtung dazu ausgebildet ist, bei erkannter Mehrdeutigkeit der Fahrtroute für jede mögliche Route einen Grenzwert für die Sollgeschwindigkeit zu berechnen und den größten dieser Grenzwerte für die Begrenzung der Sollgeschwindigkeit auszuwählen.

Auf diese Weise wird erreicht, daß sich die Begrenzungseinrichtung auch dann, wenn die voraussichtliche Fahrroute nicht klar ist, stets in einem definierten Zustand befindet und deshalb auch dann aktiv sein kann, wenn keine Information über die vom Fahrer voraussichtlich gewählte Route vorhanden ist. Bei der Annäherung an eine Kreuzung oder Weggabelung beruht die Funktionsweise der Begrenzungseinrichtung auf der Annahme, daß der Fahrer unter den verschiedenen denkbaren Routen diejenige wählen wird, die die größte Geschwindigkeit erlaubt. Diese Annahme muß zwar nicht immer zutreffend sein, sie schafft jedoch die Voraussetzung dafür, daß bei unbekannter Fahrtroute die Begrenzungseinrichtung überhaupt aktiv sein kann und somit jedenfalls auf den Streckenabschnitten, auf denen die Route eindeutig ist, eine automatische Geschwindigkeitsanpassung ermöglicht. Dabei wird bewußt in Kauf genommen, daß der Fahrer gelegentlich aktiv in die Längsführung eingreifen muß, nämlich immer dann, wenn er unter mehreren möglichen Routen diejenige wählt, die nur eine Fahrt mit kleinerer Geschwindigkeit erlaubt. In solchen Situationen, die ohnehin nur sporadisch auftreten werden, wird der Fahrer jedoch damit rechnen, daß die Begrenzungseinrichtung die angepaßte Geschwindigkeit nicht richtig vorhersagen kann, und er wird deshalb darauf vorbereitet sein, daß er aktiv in die Längsführung eingreifen muß. Die damit verbundene Beeinträchtigung des Komforts ist ohne weiteres hinzunehmen. Es überwiegt der Vorteil, daß in allen übrigen Situationen die Funktion der Begrenzungseinrichtung zur Verfügung steht.

Vorteilhafte Ausgestaltungen und Weiterbildungen der Erfindung ergeben sich aus den Unteransprüchen.

Im Rahmen der Funktion der Begrenzungseinrichtung muß entschieden werden, ob die Fahrtroute eindeutig oder mehrdeutig ist. Für diese Entscheidung können verschiedene Zusatzkriterien herangezogen werden, insbesondere der Zustand des Fahrlrichtungsanzeigers. Dadurch läßt sich die Häufigkeit von Situationen, in denen der Fahrer doch noch in die Längsführung eingreifen muß, beträchtlich reduzieren. Ein erwünschter Nebeneffekt besteht darin, daß der Fahrer auf diese Weise dazu angehalten wird, seine Absicht durch frühzeitiges Setzen des Fahrhichtungsanzeigers (Blinkers) deutlich zu machen.

Gegebenenfalls können zur Beseitigung der Mehrdeutigkeit auch Lenkaktionen des Fahrers berücksichtigt werden, beispielsweise ein Wechsel auf einen Verzögerungsstreifen vor einer Autobahnausfahrt.

Wenn im Navigationssystem die Zielführungsfunktion aktiv ist, kann unter der Annahme, daß der Fahrer der berechneten Route folgen wird, die Route als eindeutig angenommen werden. In einer modifizierten Ausführungsform ist es jedoch auch denkbar, daß die von der Zielfiihrungsfunktion berechnete Route generell unberücksichtigt bleibt. In dem Fall wird eine unnötige Verzögerung des Fahrzeugs vermieden falls der Fahrer von der berechneten Route abweicht und beispielsweise eine vom Navigationssystem ausgegebene Abbiegeempfehlung ignoriert. Außerdem hat diese Variante den Vorteil, daß die Begrenzungseinrichtung stets die gleiche Funktionsweise aufweist, so daß der Fahrer sich leichter an das konsistente Systemverhalten gewöhnen kann.

ACC-Systeme weisen üblicherweise eine Resume-Taste auf, mit der der Fahrer die ACC-Funktion nach einer vorübergehenden Deaktivierung wieder aktivieren kann.

Normalerweise wird dann als Wunschgeschwindigkeit diejenige Geschwindigkeit übernommen, die vor der Deaktivierung des Systems zuletzt als Wunschgeschwindigkeit eingestellt war. Wenn bei dem erfindungsgemäßen System der Fahrer bei Mehrdeutigkeit der Route aktiv in die Längsführung eingreift, beispielsweise durch Tastenbetätigung oder durch Betätigung des Bremspedals, um eine Verzögerung des Fahrzeugs zu bewirken, so deutet dies darauf hin, daß der Fahrer sich für die Route entschieden hat, für die ein kleinerer Grenzwert für die Sollgeschwindigkeit gilt. In dem Fall kann es zweckmäßig sein, die Funktion der Resume-Taste so zu modifizieren, daß anstelle des größten Grenzwertes der kleinere Grenzwert für die Regelung zugrundegelegt wird. Der Fahrer kann dann unmittelbar nach der Deaktivierung der ACC-Funktion wieder die Resume-Taste betätigen, und das System wird die Geschwindigkeit so regeln, daß sie an die vom Fahrer gewählte Route angepaßt ist.

Die Begrenzungseinrichtung kann durch Fahrerbefehl aktivierbar und deaktivierbar sein. In einer bevorzugten Ausführungsform ist die Begrenzungseinrichtung jedoch im Freifahrtmodus automatisch aktiv, im Folgefahrtmodus hingegen automatisch inaktiv. Diese Funktionsweise beruht auf der Überlegung, daß das eigene Fahrzeug den vorausliegenden Streckenabschnitt mit der gleichen Geschwindigkeit durchfahren kann, mit dem auch das Zielobjekt diesen Streckenabschnitt durchfährt. Da sich anhand der vom Navigationssystem bereitgestellten Routeninformation die Farbahnkrümmung nur mit begrenzter Genauigkeit bestimmen läßt, wird die Begrenzungseinrichtung so programmiert sein, daß sie bei der Berechnung des Grenzwertes für die Sollgeschwindigkeit einen bestimmten Sicherheitsabschlag berücksichtigt. Im Folgefahrtmodus ist dieser Sicherheitsabschlag hingegen nicht erforderlich, und man erreicht so den Vorteil, daß der Abstand zum Zielobjekt konstant gehalten wird und unnötige, der Intuition des Fahrers widersprechende und den Kraftstoffverbrauch erhöhende Verzögerungs- und Beschleunigungsvorgänge vermieden werden. Bei einem Verlust des Zielobjekts, beispielsweise wenn das vorausfahrende Fahrzeuge abbiegt oder auf eine Nebenspur wechselt, geht das System in den Freifahrtmodus, und die Begrenzungseinrichtung wird automatisch aktiv, so daß die Fahrt mit einer angepaßten Geschwindigkeit fortgesetzt wird.

### Zeichnung

Ausführungsbeispiele der Erfindung sind in den Zeichnungen dargestellt und in der nachfolgenden Beschreibung näher erläutert.

Es zeigen:
- Figur 1: ein Blockdiagramm der Längsführungsvornchtung;
- Figur 2: eine Skizze einer Verkehrssituation, zur Illustration der Arbeitsweise der Vorrichtung; und
- Figur 3: ein Flußdiagramm zur Erläuterung der Arbeitsweise der Vorrichtung gemäß einer modifizierten Ausführungsform.

### Beschreibung des Ausfiihrungsbeispiels

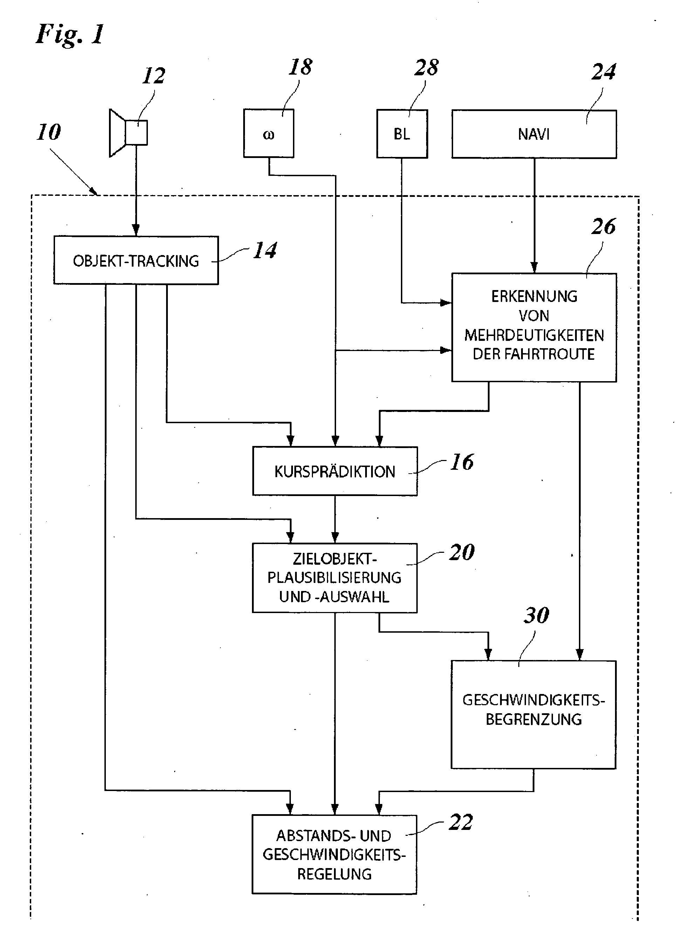

In Figur 1 ist ein ACC-System 10 dargestellt, dessen grundsätzlicher Aufbau und Wirkungsweise als bekannt vorausgesetzt werden können und deshalb hier nur kurz skizziert werden.

Ein vom im Fahrzeug eingebauter winkelauflösender Radarsensor 12 liefert Ortungsdaten (Abstände, Relativgeschwindigkeiten und Azimutwinkel) der georteten Objekte an das ACC-System 10. Die Meßdaten werden zyklisch aktualisiert. In einem Tracing-Modul 14 werden jeweils die aktuellen Meßdaten mit den Meßdaten aus vorangegangene Meßzyklen abgeglichen, so daß die Bewegungen der einzelnen Objekte verfolgt werden können.

Ein Kursprädiküonsmodul 16 dient zur Abschätzung des voraussichtlichen Kurses des eigenen Fahrzeugs. Hierzu wird im einfachsten Fall nur die Giergeschwindigkeit des eigenen Fahrzeugs ausgewertet, die mit Hilfe eines Gierratensensors 18 gemessen wird und in Verbindung mit der Fahrgeschwindigkeit des eigenen Fahrzeugs eine Bestimmung der Fahrbahnkrümmung in dem gerade vom eigenen Fahrzeug durchfahrenen Fahrbahnabschnitt ermöglicht.

Im gezeigten Beispiel werden bei der Kursprädiktion zusätzlich die Daten des Tracking-Moduls 14 ausgewertet. Der Radarsensor 12 reagiert nicht nur auf vorausfahrende Fahrzeuge, sondern auch auf stehende Objekte sowie auf Gegenverkehr. Die vorausfahrenden Fahrzeuge lassen sich jedoch anhand der Beziehung zwischen ihrer Relativgeschwindigkeit und der Fahrgeschwindigkeit des eigenen Fahrzeugs identifizieren. Wenn ein oder mehrere vorausfahrende Fahrzeuge geortet werden, so läßt sich eine bevorstehende Kurve bereits daran erkennen, daß die vorausfahrenden Fahrzeuge als Kollektiv eine Querbewegung ausführen, auch wenn das eigene Fahrzeug noch nicht in die Kurve eingefahren ist und somit die Gierrate noch praktisch gleich null ist.

Anhand des prädizierten Kurses wird dann ein Fahrschlauch bestimmt, innerhalb dessen sich diejenigen Fahrzeuge befinden müssen, die als Zielobjekt für die Abstandsregelung in Frage kommen. Im einfachsten Fall handelt es sich bei diesem Fahrschlauch um einen Streifen mit einer gewissen Standardbreite, der dem prädizierten Kurs folgt. Anhand der Daten des Tracking-Moduls 14 läßt sich jedoch auch erkennen, wie viele Spuren die von dem eigenen Fahrzeug befahrene Fahrbahn hat und auf welcher dieser Spuren sich das eigene Fahrzeug befindet. Beispielsweise kann zu diesem Zweck geprüft werden, ob vorausfahrende Fahrzeuge vorhanden sind, die über einen längeren Zeitraum einen Querversatz zum eigenen Fahrzeug aufweisen, der etwa einer üblichen Spurbreite entspricht. Ebenso kann ausgewertet werden, wie oft das eigene Fahrzeug überholt wurde oder wie oft es seinerseits Fahrzeuge auf der rechten Nebenspur überholt hat.

In einem Plausibilisierungsmodul 20 werden dann die georteten und im Tracking-Modul 14 verfolgten Objekte plausibilisiert, d. h., für jedes Objekt wird eine Wahrscheinlichkeit dafür angegeben, daß es sich innerhalb des Fahrschlauches befindet. Dabei wird berücksichtigt, daß die Ortungsdaten, insbesondere die Querpositionsdaten, gewisse Fehlertoleranzen aufweisen, die mit zunehmendem Objektabstand größer werden. Wenn die Wahrscheinlichkeit dafür, daß sich das Objekt innerhalb des Fahrschlauches befindet, oberhalb eines bestimmten Schwellenwertes liegt, wird das Objekt "plausibilisiert", d. h., es wird als ein relevantes Objekt behandelt, das sich auf der eigenen Fahrspur befindet. Unter den so plausibilisierten Objekten wird dann schließlich dasjenige mit dem kleinsten Abstand als Zielobjekt für die Abstandsregelung ausgewählt.

In einem Regler 22 erfolgt anhand der Ortungsdaten des Zielobjekts die eigentliche Abstandsregelung durch Eingriff in das Antriebssystem und erforderlichenfalls auch das Bremssystem des Fahrzeugs, so daß das Zielobjekt mit einer vom Fahrer innerhalb gewisser Grenzen wählbaren Zeitlücke verfolgt wird. Ist kein Zielobjekt vorhanden, so befindet sich das System im Freifahrtmodus, und es erfolgt normalerweise eine Regelung auf eine vom Fahrer gewählte Wunschgeschwindigkeit.

Das hier beschriebene ACC-System 10 weist eine Schnittstelle zu einem Navigationssystem 24 des Fahrzeugs auf. Dieses Navigationssystem enthält eine in digitaler Form gespeicherte Straßenkarte und ermittelt mit Hilfe eines GPS-Systems (Global Positioning System) die aktuelle Position des eigenen Fahrzeugs, so daß im ACC-System auch Informationen über den Straßentyp (Autobahn oder Landstraße) sowie über bevorstehende Ausfahrten, Kreuzungen, Einmündungen, Kurven und dergleichen zur Verfügung stehen.

Insbesondere läßt sich aus den in der digitalen Karte gespeicherten Daten die Krümmung des unmittelbar voraus liegenden Fahrbahnabschnitts bestimmen. Diese Information kann zum einen zur Verbesserung der Kursprädiktion im Prädiktionsmodul 16 genutzt werden. Sie kann jedoch, insbesondere im Freifahrtmodus, auch dazu benutzt werden, die Längsführung des Fahrzeugs zu verbessern. Unter Vorgabe einer vom Fahrzeugtyp abhängigen maximalen Querbeschleunigung, die noch als komfortabel empfunden wird, läßt sich nämlich anhand der Fahrbahnkrümmung ein oberer Grenzwert für die Geschwindigkeit berechnen, mit der der betreffende Fahrbahnabschnitt durchfahren werden sollte. Wenn dieser Grenzwert kleiner ist als die Wunschgeschwindigkeit, so ist es zweckmäßig, die Geschwindigkeitsregelung so zu modifizieren, daß nicht auf die Wunschgeschwindigkeit, sondern auf den Grenzwert geregelt wird.

Darüber hinaus läßt sich anhand der vom Navigationssystem gelieferten Daten auch entscheiden, ob es bei dem voraus liegenden Fahrbahnabschnitt um eine Landstraße außerhalb geschlossener Ortschaften oder um eine innerörtliche Straße handelt, so daß dann als Grenzwert die für den betreffenden Straßentyp geltende gesetzliche Höchstgeschwindigkeit gewählt werden kann. Entsprechendes gilt auch in den Fällen, in denen ein "intelligentes" Navigationssystem Informationen über etwa bestehende Geschwindigkeitsbeschränkungen bereitstellt.

Wenn jedoch vor einer Kreuzung, Abzweigung oder Weggabelung mehrere mögliche Fahrtrouten zur Verfügung stehen, was ebenfalls anhand der Daten des Navigationssystems erkennbar ist, so müssen bestimmte Annahmen darüber gemacht werden, welcher Route der Fahrer voraussichtlich folgen wird, damit das System in jeder Situation ein definiertes Verhalten zeigt. Aus diesem Grund weist die in Figur 1 gezeigte Vorrichtung ein Modul 26 auf, das anhand der Daten des Navigationssystems 24 solche Mehrdeutigkeiten der Fahrtroute erkennt. Um solche Mehrdeutigkeiten zu beseitigen oder zumindest einzugrenzen, erhält das Modul 26 zusätzlich Signale von einem Zustandssensor 28, der den aktuellen Zustand des Fahrtrichtungsanzeigers (Blinkers) des eigenen Fahrzeugs angibt. Wenn beispielsweise eine Abbiegemöglichkeit nach rechts besteht und der rechte Blinker gesetzt ist, so läßt sich daraus schließen, daß der Fahrer beabsichtigt, nach rechts abzubiegen, und für die Bestimmung des Geschwindigkeits-Grenzwertes ist dann folglich die nach rechts abbiegende Route maßgeblich. Wenn jedoch weder der rechte noch der linke Blinker gesetzt ist, bleibt die Situation mehrdeutig, denn es ist unklar, ob der Fahrer wirklich geradeaus fahren will oder nur vergessen hat, den Blinker zu setzen. Eine Beseitigung der Mehrdeutigkeit ist dann eventuell dadurch möglich, daß das Lenkverhalten des Fahrers ausgewertet wird Zu diesem Zweck erhält das Modul 26 im gezeigten Beispiel auch das Signal des Gierratensensors 18.

Wenn im Navigationssystem 24 die Zielführungsfunktion aktiviert ist, so kann wahlweise zur Beseitigung der Mehrdeutigkeit auch angenommen werden, daß der Fahrer der vom Zielführungssystem berechneten Route folgen wird. In dem hier betrachteten Beispiel soll die vom Zielführungssystem bereitgestellte Routeninformation jedoch unberücksichtigt bleiben.

Wenn in einer Folgefahrtsituation ein Zielobjekt ausgewählt ist und verfolgt wird, so ist es für die Zwecke der Abstandsregelung eine sinnvolle Annahme, daß das eigene Fahrzeug dem Kurs des Zielobjekts folgen wird. Diese Annahme liegt der Kursprädiktion im Prädiktionsmodul 16 zugrunde.

Im Freifahrtmodus erfolgt die Berechnung des oben erwähnten Geschwindigkeits-Grenzwertes in einer Begrenzungseinrichtung 30, die vom Modul 26 die Fahrbahndaten aller möglichen Routen erhält, die nach weitestgehender Beseitigung der Mehrdeutigkeit noch übrig bleiben. Außerdem erhält die Begrenzungseinrichtung 30 vom Plausilisierungsmodul 20 die Information, ob ein Zielobjekt ausgewählt ist oder nicht. Wenn ein Zielobjekt ausgewählt ist, also im Folgefahrtmodus, bleibt die Begrenzungseinrichtung 30 inaktiv, und im Regler 22 erfolgt die Abstandsregelung auf das Zielobjekt unabhängig von den Daten, die das Navigationssystem 24 bereitstellt.

Im Freifahrtmodus berechnet die Begrenzungseinrichtung 30 für jede der möglichen Routen einen gesonderten Grenzwert, jeweils anhand der für die betreffenden Route geltenden Fahrbahnkrümmung. Die Begrenzungseinrichtung 30 wählt dann den größten der so berechneten Grenzwerte aus und vergleicht ihn mit der vom Fahrer gewählten Wunschgeschwindigkeit. Der kleinere der beiden miteinander verglichenen Werte wird dann als Sollgeschwindigkeit an den Regler 22 übergeben.

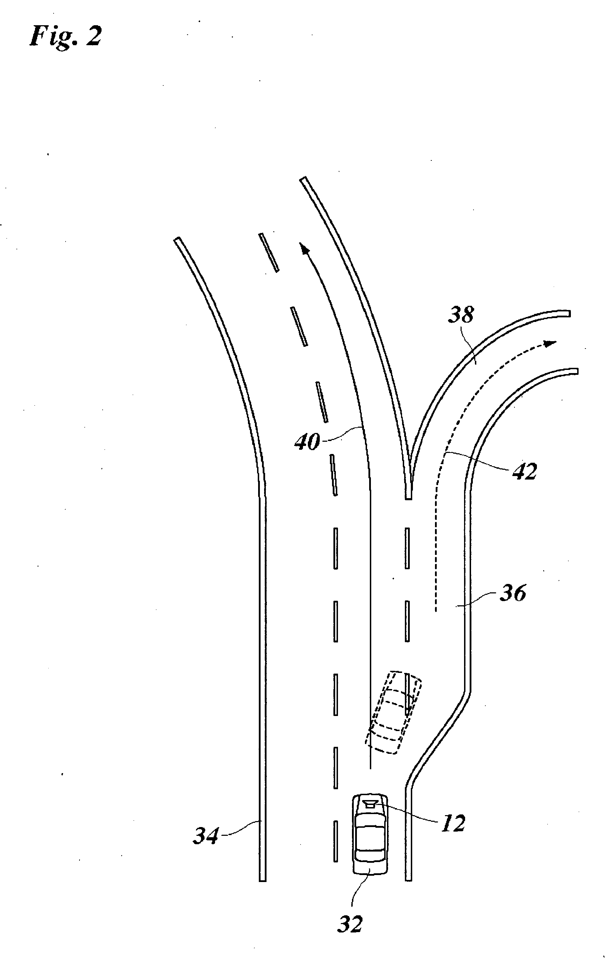

In Figur 2 ist die Wirkungsweise der oben beschriebenen Vorrichtung anhand eines Beispiels illustriert.

Ein Fahrzeug 32, das mit der Vorrichtung nach Figur 1 ausgerüstet ist, fährt auf der rechten Spur einer zweispurigen Fahrbahn 34, beispielsweise einer Richtungsfahrbahn einer Autobahn, und nähert sich einer Ausfahrt mit einem Verzögerungsstreifen 36, der in eine relativ scharf nach rechts abknickende Abbiegespur 38 übergeht, während die Fahrbahn 34 hinter der Ausfahrt eine leichte Linkskurve beschreibt. Für das Fahrzeug 32 stehen somit zwei mögliche Routen 40 und 42 zur Verfügung, die sich in der Fahrbahnkrümmung unterscheiden. Jede dieser beiden Krümmungen definiert einen Geschwindigkeits-Grenzwert, der nicht überschritten werden sollte, wenn das Fahrzeug 32 diese Route befährt und dabei die Querbeschleunigung des Fahrzeugs unterhalb der unter Komfort- und Sicherheitsgesichtspunkten akzeptablen Höchstgrenze bleiben soll.

Das Modul 26 (Figur 1) erkennt die Mehrdeutigkeit der Situation und meldet die zu den beiden Routen 40 und 42 gehörenden Krümmungen an die Begrenzungseinrichtung 30, die die zugehörigen Grenzwerte für die Geschwindigkeit berechnet und dann als den größeren dieser beiden Grenzwerte denjenigen auswählt, der zu der Route 40 gehört. Dabei soll zunächst angenommen werden, daß der Fahrtrichtungsanzeiger des Fahrzeugs 32 nicht gesetzt ist. Außerdem wird angenommen, daß die aktuelle Geschwindigkeit des Fahrzeugs 32, die hier, da eine Freifahrtsituation vorliegt, der vom Fahrer gewählten Wunschgeschwindigkeit entspricht, größer ist als der ausgewählte Grenzwert. Folglich bildet dieser Grenzwert die Sollgeschwindigkeit, die an den Regler 22 übermittelt wird. Der Regler 22 berechnet daraufhin eine (negative) Freifahrt-Sollbeschleunigung, durch die sichergestellt wird, daß die Geschwindigkeit des Fahrzeugs 32 auf den Grenzwert abgenommen hat, wenn das Fahrzeug in die leichte Linkskurve einfährt.

In der Praxis kann dabei so vorgegangen werden, daß die Berechnung des Grenzwertes anhand der Fahrbahnlavmmung für einen bestimmten Punkt erfolgt, der um eine vorgegebene, vorzugsweise geschwindigkeitsabhängige Distanz vor der aktuellen Position des Fahrzeugs 32 liegt. Diese Distanz ist dabei so gewählt, daß die notwendige Verzögerung des Fahrzeugs 32 im komfortablen Bereich bleiben kann. In einer verfeinerten Ausfiihrungsform ist es auch möglich, daß die Begrenzungseinrichtung mehrere Grenzwerte für mehrere Punkte längs der Route 40 berechnet und diese Grenzwerte zusammen mit den Abständen der betreffenden Punkte an den Regler 22 übermittelt, so daß der Regler anhand dieser Daten eine optimale Verzögerungsstrategie berechnen kann.

Wenn in der in Figur 2 gezeigten Situation bei dem Fahrzeug 32 der rechte Blinker gesetzt ist, so erkennt das Modul 26, daß die Fahrtroute eindeutig ist, und die Begrenzungseinrichtung 30 übermittelt an den Regler 22 den entsprechenden Grenzwert oder die Grenzwerte für die Route 42, mit der Folge, daß das Fahrzeug 32 stärker verzögert wird, bevor es in die Abbiegespur 38 einfährt.

Falls der Fahrer den Fahrtrichtungsanzeiger nicht gesetzt hat, aber dennoch abbiegen will, so kann ggf. zu einem etwas späteren Zeitpunkt anhand der Lenkbewegungen erkannt werden, daß das Fahrzeug auf den Verzögerungsstreifen 36 wechselt, wie in Figur 2 gestrichelt angedeutet ist. Dabei wird ggf. die im Navigationssystem verfügbare Information über das Vorhandensein und den Beginn des Verzögerungsstreifens 36 genutzt und ggf. auch die im ACC-System verfügbare Information darüber, auf welcher Spur sich das Fahrzeug 32 befindet. So läßt sich verhindern, daß ein Spurwechsel des Fahrzeugs von der linken Spur auf die rechte Spur der Fahrbahn 34 fälschlich als eine Abbiegeabsicht interpretiert wird.

Falls der Fahrer des Fahrzeugs 32 entsprechend der Route 42 abbiegen will, diese Abbiegeabsicht jedoch nicht oder zu spät erkannt wird, so muß und wird der Fahrer selbst in die Längsführung eingreifen, um das Fahrzeug ausreichend zu verzögern. Die damit verbundene Beeinträchtigung des Komforts ist wesentlich geringer als die Beeinträchtigung, die im umgekehrten Fall einträte, wenn die Begrenzungseinrichtung 42 in einer mehrdeutigen Situation den kleineren Grenzwert (entsprechend der Route 42) wählen würde, der Fahrer aber tatsächlich der Route 40 folgen will, die eine höhere Geschwindigkeit zuläßt. Die relativ starke, an die Route 42 angepaßte Verzögerung des Fahrzeugs wäre dann unnötig und unplausibel und würde vom Fahrer sowie vom Nachfolgeverkehr als störend und irritierend empfunden. Dadurch, daß erfindungsgemäß immer der größte Grenzwert für die Geschwindigkeit gewählt wird, läßt sich dieser Nachteil vermeiden.

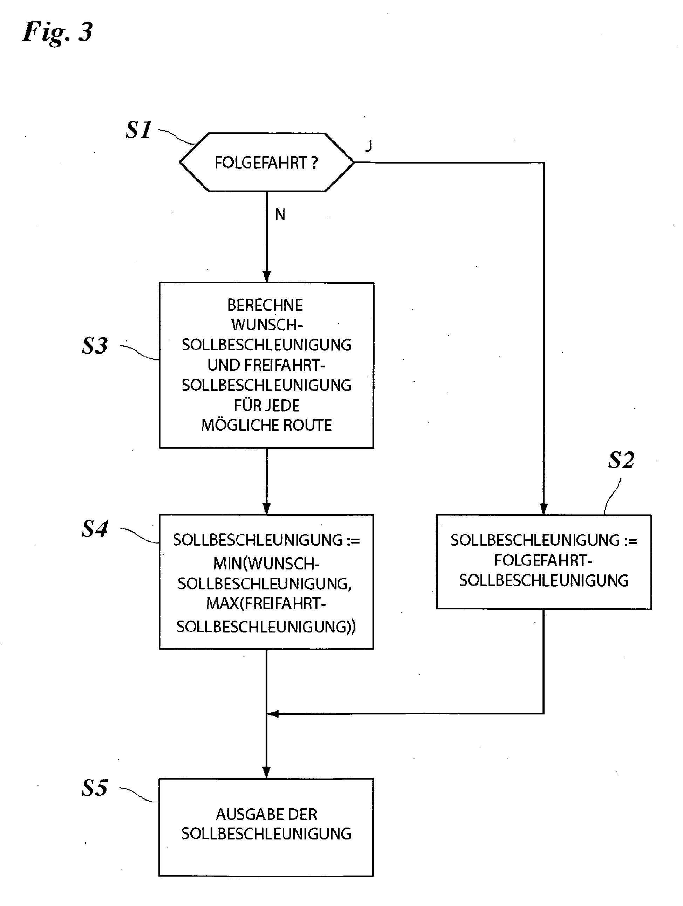

In Figur 3 ist in einem Flußdiagramm eine leicht modifizierte Funktionsweise der Vorrichtung dargestellt, die jedoch im Ergebnis zu der oben beschriebenen Funktionsweise äquivalent ist.

In Schritt S1 wird entschieden, ob sich das ACC-System 10 im Folgefahrtmodus (J) oder im Freifahrtmodus (N) befindet. Wenn sich das System im Folgefahrtmodus befindet, berechnet der Regler 22 in Schritt S2 anhand der vom Tracking-Modul 14 gelieferten Daten über das Zielobjekt als Sollbeschleunigung eine Folgefahrt-Sollbeschleunigung, die sicherstellt, daß das Zielobjekt mit der vorgegebenen Zeitlücke verfolgt wird.

Im Freifahrtmodus werden dagegen in Schritt S3 durch die Begrenzungseinrichtung 30 eine Wunsch-Sollbeschleunigung sowie Freifahrt-Sollbeschleunigungen für jede der möglichen Routen berechnet. Die Wunsch-Sollbeschleunigung ist diejenige Beschleunigung, die erforderlich ist, die vom Fahrer gewählte Wunschgeschwindigkeit zu halten oder wieder zu erreichen. Die Freifahrt-Sollbeschleunigungen sind von der Fahrbahnkrümmung und/oder sonstigen Fahrbahnmerkmalen der betreffenden Route abhängig. Bei deren Berechnung greift die Begrenzungseinrichtung 30 auf die vom Navigationssystem 24 bereitgestellten Fahrbahndaten für die vom Modul 26 als möglich erachteten Routen zurück. In Schritt S4 berechnet die Begrenzungseinrichtung 30 dann als Sollbeschleunigung das Minimum aus der Wunsch-Sollbeschleunigung und dem Maximum der Freifahrt-Sollbeschleunigungen.

In Schritt S5 wird dann durch den Regler 22 entweder die in Schritt S2 berechnete Sollbeschleunigung oder die in Schritt S4 berechnete Sollbeschleunigung an das Antriebs- und/oder Bremssystem des Fahrzeugs ausgegeben.

Bei diesem Ausführungsbeispiel wird somit anders als bei dem zuvor beschriebenen Ausführungsbeispiel nicht auf die Sollgeschwindigkeit, sondern auf die Sollbeschleunigung abgestellt. Auch hier erfolgt jedoch in Schritt S3 die Berechnung der Freifahrt-Sollbeschleunigungen in der Weise, daß zunächst für jede Route anhand der Fahrbahnkrümmung ein Grenzwert für die Geschwindigkeit bestimmt wird, und die Sollbeschleunigung wird dann so berechnet, daß die tatsächliche Geschwindigkeit bei Erreichen des betreffenden Fahrbahnabschnitts dem Grenzwert entspricht. Die Grenzwerte sind somit implizit in den Freifahrt-Sollbeschleunigungen enthalten.

## Patentansprüche

1. Vorrichtung zur Längsführung eines Kraftfahrzeugs, mit einem Sensorsystem (12) zur Ortung vorausfahrender Fahrzeuge, einem Regler (22), der die Geschwindigkeit des Fahrzeugs (32) entweder, in einem Folgefahrtmodus, in Abhängigkeit vom Abstand zu einem vorausfahrenden Fahrzeug oder, in einem Freifahrtmodus, auf einen Sollwert regelt, einer Schnittstelle zu einem Navigationssystem (24), das Informationen über die befahrene Route (40, 42) bereitstellt, und einer Begrenzungseinrichtung (30) zur Begrenzung der Sollgeschwindigkeit anhand der bereitgestellten Informationen, **dadurch gekennzeichnet, daß** die Begrenzungseinrichtung (30) dazu ausgebildet ist, bei erkannter Mehrdeutigkeit der Fahrtroute für jede mögliche Route (40, 42) einen Grenzwert für die Sollgeschwindigkeit zu berechnen und den größten dieser Grenzwerte für die Begrenzung der Sollgeschwindigkeit auszuwählen.

2. Vorrichtung nach Anspruch 1, **dadurch gekennzeichnet, daß** die Begrenzungseinrichtung (30) dazu ausgebildet ist, eine Sollgeschwindigkeit zu bestimmen, die gleich dem Minimum aus einer vom Fahrer gewählten Wunschgeschwindigkeit und dem ausgewählten Grenzwert ist.

3. Vorrichtung nach Anspruch 1 oder 2, **dadurch gekennzeichnet, daß** die Grenzwerte für die Sollgeschwindigkeit von der vom Navigationssystem (24) bereitgestellten Information über die Fahrbahnkrümmung auf der betreffenden Route (40, 42) abhängig sind.

4. Vorrichtung nach einem der vorstehenden Ansprüche, **gekennzeichnet durch** ein Modul (26), das dazu ausgebildet ist, anhand der vom Navigationssystem (24) bereitgestellten Informationen über das Straßennetz verschiedene Routenoptionen zu erkennen und anhand zusätzlicher Informationen zu entscheiden, welche dieser Routen als mögliche Routen (40, 42) des Fahrzeugs (32) in Frage kommen.

5. Vorrichtung nach Anspruch 4, **dadurch gekennzeichnet, daß** eine der zusätzlichen Informationen das Signal eines Zustandssensors (28) ist, das den Zustand eines Fahrrichtungsanzeigers des Fahrzeugs angibt.

6. Vorrichtung nach Anspruch 4 oder 5, **dadurch gekennzeichnet, daß** eine der zusätzlichen Informationen eine Information eines Zielfiihrungssystems des Navigationssystems (24) über eine berechnete Fahrtroute ist.

7. Vorrichtung nach einem der vorstehenden Ansprüche, **dadurch gekennzeichnet, daß** die Begrenzungseinrichtung (30) nur im Freifahrtmodus aktiv ist.

8. Vorrichtung nach Anspruch 7, **dadurch gekennzeichnet, daß** die Begrenzungseinrichtung (30) bei einem Wechsel vom Folgefahrtmodus in den Freifahrtmodus automatisch aktivierbar ist.

## Claims

1. Device for longitudinally guiding a motor vehicle, having a sensor system (12) for locating vehicles travelling ahead, a controller (22) which adjusts the speed of the vehicle (32) to a setpoint value either in a following travel mode, as a function of the distance from a vehicle travelling ahead, or in a freely travelling mode, an interface with a navigation system (24) which makes available information about the route (40, 42) being travelled on, and a limiting device (30) for limiting the setpoint speed on the basis of the information made available, **characterized in that** the limiting device (30) is designed, in the event of ambiguity of the route being detected, to calculate a limiting value for the setpoint speed for each possible route (40, 42) and to select the largest of these limiting values for the limitation of the setpoint speed.

2. Device according to Claim 1, **characterized in that** the limiting device (30) is designed to determine a setpoint speed which is equal to the minimum of a desired speed selected by the driver and the selected limiting value.

3. Device according to Claim 1 or 2, **characterized in that** the limiting values for the setpoint speed are dependent on the information about the curvature of the carriageway on the respective route (40, 42) which is made available by the navigation system (24).

4. Device according to one of the preceding claims, **characterized by** a module (26) which is designed to detect various route options on the basis of the information made available by the navigation system (24) and to decide, on the basis of additional information, which of these routes are possible routes (40, 42) of the vehicle (32).

5. Device according to Claim 4, **characterized in that** one of the additional information items is the signal of a status sensor (28) which indicates the status of a travel direction indicator of the vehicle.

6. Device according to Claim 4 or 5, **characterized in that** one of the additional information items is an information item from a routing system of the navigation system (24) relating to a calculated route.

7. Device according to one of the preceding claims, **characterized in that** the limiting device (30) is only active in the freely travelling mode.

8. Device according to Claim 7, **characterized in that** the limiting device (30) can be activated automatically when there is a changeover from the following travel mode into the freely travelling mode.

## Revendications

1. Dispositif de guidage longitudinal d'un véhicule automobile, qui présente
un système de détecteur (12) permettant de localiser des véhicules circulant à l'avant, un régulateur (22) qui régule la vitesse du véhicule (32) soit, dans un mode de suivi, en fonction de la distance par rapport à un véhicule circulant à l'avant soit, dans un mode de déplacement libre, à une valeur de consigne,
une interface avec un système de navigation (24) qui délivre des informations sur la route parcourue (40, 42) et
un dispositif de limitation (30) qui limite la vitesse de consigne à l'aide des informations délivrées,
**caractérisé en ce que**
le dispositif de limitation (30) est configuré pour calculer une valeur limite de la vitesse de consigne lorsqu'il existe plusieurs itinéraires possibles pour chaque route (40, 42) et pour sélectionner la plus grande de ces valeurs limites en vue de limiter la vitesse de consigne.

2. Dispositif selon la revendication 1, **caractérisé en ce que** le dispositif de limitation (30) est configuré pour définir une vitesse de consigne qui est égale à la plus petite des valeurs vitesse souhaitée sélectionnée par le conducteur et vitesse limite sélectionnée.

3. Dispositif selon les revendications 1 ou 2, **caractérisé en ce que** les valeurs limites de la vitesse de consigne dépendent des informations délivrées par le système de navigation (24) à propos des virage de la chaussée sur la route (40, 42) concernée.

4. Dispositif selon l'une des revendications précédentes, **caractérisé par** un module (26) configuré pour, à l'aide des informations délivrées par le système de navigation (24) à propos du réseau routier, détecter différentes options d'itinéraire et décider à partir d'informations supplémentaires quel itinéraire peut être envisagé comme route (40, 42) possible pour le véhicule (32).

5. Dispositif selon la revendication 4, **caractérisé en ce que** l'une des informations supplémentaires est le signal d'un détecteur d'état (28) qui indique l'état d'un pointeur de direction du déplacement du véhicule.

6. Dispositif selon les revendications 4 ou 5, **caractérisé en ce qu'**une des informations supplémentaires est une information d'un système de guidage vers la destination du système de navigation (24) par un itinéraire calculé.

7. Dispositif selon l'une des revendications précédentes, **caractérisé en ce que** le dispositif de limitation (30) n'est actif qu'en mode de conduite libre.

8. Dispositif selon la revendication 7, **caractérisé en ce que** le dispositif de limitation (30) peut être activé automatiquement lors d'un basculement du mode de conduite de suivi au mode de conduite libre.
